# EUROPEAN PATENT SPECIFICATION

(11) **EP 4 393 739 B1**
(45) Date of publication and mention of the grant of the patent: **11.11.2026**
(21) Application number: 22885009.5
(22) Date of filing: 25.04.2022
(51) Int. Cl.: B60W 10/02, B60W 10/06, B60W 10/08, B60W 10/10, B60W 10/111, B60W 10/113, B60K 6/442, B60K 6/36, B60K 6/387, B60K 6/547, B60K 6/40, B60K 6/485

(54) **HYBRID SYSTEM AND VEHICLE**
HYBRIDSYSTEM UND FAHRZEUG
SYSTÈME HYBRIDE ET VÉHICULE

(30) Priority: 27.10.2021 CN 202111253291
(43) Date of publication of application: 03.07.2024
(73) Proprietor: Chery Automobile Co., Ltd., Wuhu, Anhui 241006 (CN)
(72) Inventor: ZHANG, Hengxian, Wuhu, Anhui 241006 (CN); ZHOU, Zhiguang, Wuhu, Anhui 241006 (CN); YE, Yuanlong, Wuhu, Anhui 241006 (CN); GENG, Lizhen, Wuhu, Anhui 241006 (CN); LI, Yanan, Wuhu, Anhui 241006 (CN); HUANG, Dong, Wuhu, Anhui 241006 (CN)
(74) Representative: Yang, Shu
(86) International application number: PCT/CN2022/088905
(87) International publication number: WO 2023/071093

(56) References cited:
- WO-A1-2021/098221
- CN-A- 111 497 590
- CN-A- 112 013 085
- CN-A- 112 013 085
- CN-A- 113 022 295
- CN-A- 113 978 234
- CN-U- 207 291 649
- CN-U- 212 637 473
- DE-A1- 102016 220 117
- DE-A1- 102019 209 931
- FR-A1- 3 103 149
- JP-A- 2002 120 576
- KR-A- 20160 134 967
- US-A1- 2013 345 019

## Description

### TECHNICAL FIELD

The present disclosure relates to the technical field of automobiles, and in particular, to a hybrid power system and a vehicle.

### BACKGROUND

Most traditional automobiles use fossil fuels (such as gasoline and diesel oil) to supply power for engines, and their exhaust gas pollutes the environment. Therefore, it is urgent to replace fossil fuels with new pollution-free energy sources (such as electric energy) to provide power for automobiles, and the automobiles equipped with hybrid power systems are the trend of development.

In practice, a motor of a hybrid power automobile is directly incorporated into a hydraulic automatic transmission (AT), a mechanical continuously variable transmission (CVT), or an electronic automated mechanical transmission (AMT), and the hybrid transmission system has a complex structure and low transmission efficiency.

CN 113022295 A 1 discloses hybrid power system and control method, including: an engine, a first motor, a first main shaft, a second main shaft, a first gear train, a second gear train, a third gear train, a first synchronizer, and a second synchronizer.

FR 3103149 A1 discloses a hybrid vehicle powertrain, including a main electric machine, a secondary electric machine, and a combustion engine with parallel shafts, and a parallel-shaft gearbox with parallel shafts and gears.

WO 2021/098221 A1 discloses a hybrid electric vehicle power system, including an engine, an ISG motor, an engine transmission mechanism, an electromagnetic clutch, a drive motor, a drive motor transmission mechanism, and a power output shaft.

DE 102016220117 A1 discloses a drive train for a motor vehicle and method for operating a motor vehicle with a drive train according to the invention, including an internal combustion engine with a crankshaft and at least one electric motor with a rotor.

DE 102019209931 A1 discloses a hybrid transmission for a motor vehicle drive train with an internal combustion engine, a first electric drive motor and a second electric drive motor.

US 2013/345019 A1 discloses a hybrid drive of a motor vehicle having an automated manual transmission with two input shafts and a common output shaft. The first input shaft can be connected to the drive shaft of an internal combustion engine by a clutch and can be brought into a drive connection to the output shaft by a first group of shiftable gearwheel sets.

CN 112013085 A discloses hybrid transmission, drive assembly, control method, and vehicle. The hybrid transmission includes a first input shaft, a second input shaft, an output shaft, a multi-speed gear pair, and a synchronizer.

### SUMMARY

Embodiments of the present disclosure provide a hybrid power system and a vehicle

According to the present invention, a hybrid power system is provided. The hybrid power system includes: a gearbox, an engine, a first motor, and a second motor, wherein the gearbox includes a first input shaft, an output shaft, a second input shaft, a first speed change mechanism, and a second speed change mechanism, the first input shaft is connected to the output shaft via the first speed change mechanism, the second input shaft is connected to the output shaft via the second speed change mechanism, and the first input shaft is coaxially spaced from the second input shaft; the engine and the first motor are drivingly connected to the first input shaft; the second motor is drivingly connectable to the second input shaft;
the first speed change mechanism comprises a first gear train, a first synchronizer and a third gear train; wherein an input idle gear of the first gear train is on the first input shaft, an output gear of the first gear train is coaxially fixed to the output shaft, an output gear of the third gear train is coaxially fixed to the output shaft, the first synchronizer is sleeved on the first input shaft, the first synchronizer is disposed between the input idle gear of the first gear train and an input idle gear of the third gear train, and the first synchronizer is configured to cause at most one of the input idle gear of the first gear train and the input idle gear of the third gear train to be connected to the first input shaft;
the second speed change mechanism comprises a second gear train, a support shaft and a clutch, wherein an input gear of the second gear train is coaxially fixed to the second input shaft, an output gear of the second gear train is coaxially fixed to the output shaft, the clutch is disposed between the input gear of the second gear train and the second motor, a first end of the support shaft is movably connected to a first end of the first input shaft in a circumferential direction, a second end of the first input shaft is drivingly connected to the engine, and a second end of the support shaft is coaxially fixed to the second input shaft; and the input idle gear of the third gear train is on the support shaft; and
a sleeve coaxially fixed to the support shaft is arranged at the first end of the support shaft, one end of the sleeve is open, and the sleeve is opposite to the first end of the first input shaft, and a bearing is arranged in the sleeve, wherein an outer ring of the bearing is connected to an inner wall of the sleeve, and an inner ring of the bearing is sleeved on the first end of the first input shaft.

In some embodiments, the input gear of the second gear train is disposed at one end of the second input shaft opposite to the first input shaft.

In some embodiments, the gearbox further includes a fourth gear train, wherein the first motor is coaxially fixed to an input gear of the fourth gear train, and an output gear of the fourth gear train is coaxially fixed to the first input shaft.

In some embodiments, the hybrid power system further includes a power supply assembly, wherein the power supply assembly includes a battery and two inverters, the two inverters being connected to the battery, the first motor being connected to one of the two inverters, and the second motor being connected to the other of the two inverters.

According to some embodiments of the present invention, a vehicle is provided. The vehicle includes the hybrid power system as described above.

### BRIEF DESCRIPTION OF THE DRAWINGS

For clearer illustration of the technical solutions in the embodiments of the present disclosure, the drawings required to be used in the description of the embodiments are briefly introduced below. It is apparent that the drawings in the description below are only for some embodiments of the present disclosure, and that other embodiments can be derived without departing from the scope of the present disclosure.
FIG. 1 is an example of a schematic structural diagram of a hybrid power system not falling within the subject-matter for which protection is sought;
FIG. 2 is an example of a schematic structural diagram of a hybrid power system not falling within the subject-matter for which protection is sought;
FIG. 3 is a schematic structural diagram of a hybrid power system according to an embodiment of the present invention;
FIG. 4 is an example of a schematic structural diagram of a hybrid power system not falling within the subject-matter for which protection is sought;
FIG. 5 is a schematic diagram of the power transfer of a hybrid power system in an electric-only mode according to an example not falling within the subject-matter for which protection is sought;
FIG. 6 is a schematic diagram of the power transfer of a hybrid power system in an engine-only mode according to an example not falling within the subject-matter for which protection is sought;
FIG. 7 is a schematic diagram of the power transfer of a hybrid power system in a hybrid mode according to an example not falling within the subject-matter for which protection is sought;
FIG. 8 is a schematic diagram of the power transfer of a hybrid power system in a hybrid mode according to an example not falling within the subject-matter for which protection is sought;
FIG. 9 is a schematic diagram of the power transfer of a hybrid power system in a hybrid mode according to an example not falling within the subject-matter for which protection is sought;
FIG. 10 is a schematic diagram of the power transfer of a hybrid power system in a power recovery mode according to an example not falling within the subject-matter for which protection is sought;
FIG. 11 is a schematic diagram of the power transfer of a hybrid power system in an electric-only mode according to some embodiments of the present disclosure;
FIG. 12 is a schematic diagram of the power transfer of a hybrid power system in an engine-only mode according to some embodiments of the present disclosure;
FIG. 13 is a schematic diagram of the power transfer of a hybrid power system in a hybrid mode according to some embodiments of the present disclosure;
FIG. 14 is a schematic diagram of the power transfer of a hybrid power system in a hybrid mode according to some embodiments of the present disclosure;
FIG. 15 is a schematic diagram of the power transfer of a hybrid power system in a hybrid mode according to some embodiments of the present disclosure; and
FIG. 16 is a schematic diagram of the power transfer of a hybrid power system in a power recovery mode according to some embodiments of the present disclosure.

### DETAILED DESCRIPTION

For clearer descriptions of the objectives, technical solutions, and advantages of the present disclosure, the embodiments of the present disclosure are further described in detail below with reference to the accompanying drawings.

Unless otherwise defined, technical or scientific terms used herein shall have the ordinary meaning as understood by those of ordinary skill in the art to which the present disclosure belongs. "First", "second", "third", and other similar words, as used in the specification and in the claims of the patent application of the present disclosure, do not indicate any order, quantity, or importance, but are merely defined to distinguish different components. Likewise, "a", "an" or other similar words do not indicate a limitation of quantity, but rather the presence of at least one. "Include", "comprise" or other similar words mean that the elements or objects stated before "include" or "comprise" encompass the elements or objects and equivalents thereof listed after "include" or "comprise", but do not exclude other elements or objects. "Connecting", "connected", or other similar words are not limited to physical or mechanical connections, but may include electrical connections, whether direct or indirect. "Up", "down", "left", "right", "top", "bottom", and the like are merely defined to indicate relative positional relationships. In the case that the absolute position of a described object changes, the relative position relationship may also change accordingly.

In some practice of the related art, a hybrid power system is provided in a vehicle. The system includes an engine, a motor, and a gearbox, wherein the gearbox includes an input shaft and an output shaft, and the input shaft is drivingly connected to the output shaft via at least one speed change mechanism. The engine and the motor are drivingly connected to the input shaft, such that the kinetic energy is transmitted to the output shaft via the input shaft to drive the wheels to rotate.

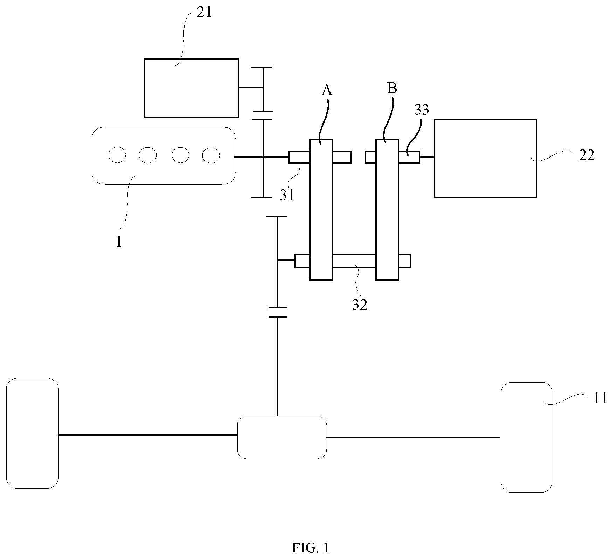

FIG. 1 is an example of a schematic structural diagram of a hybrid power system not falling within the subject-matter for which protection is sought. As shown in FIG. 1, the hybrid power system includes a gearbox, an engine 1, a first motor 21, and a second motor 22.

As shown in FIG. 1, the gearbox includes a first input shaft 31, an output shaft 32, a second input shaft 33, a first speed change mechanism A, and a second speed change mechanism B, wherein the first input shaft 31 and the output shaft 32 are connected via the first speed change mechanism A, and the second input shaft 33 and the output shaft 32 are connected via the second speed change mechanism B.

As shown in FIG. 1, the engine 1 and the first motor 21 are drivingly connected to the first input shaft 31, and the second motor 22 is drivingly connected to the second input shaft 33.

In the hybrid power system provided, the first input shaft is connected to the output shaft of the gearbox via the first speed change mechanism, the second input shaft is connected to the output shaft of the gearbox via the second speed change mechanism, and the kinetic energy output by the engine and the two motors is transmitted to the output shaft through the two speed change mechanisms, such that the purpose of driving a vehicle to travel is achieved. Because the gearbox only uses two speed change mechanisms connected to the corresponding input shaft and output shaft, there is no other redundant structures, and the overall structure of the gearbox is simpler. In the single motor mode that only a motor needs to work alone, only the second motor needs to work, and the power of the second motor is directly transmitted to the second input shaft, such that the engine and the first motor are not directly dragged by the second input shaft to rotate, and the energy loss is avoided, thereby increasing the transmission efficiency.

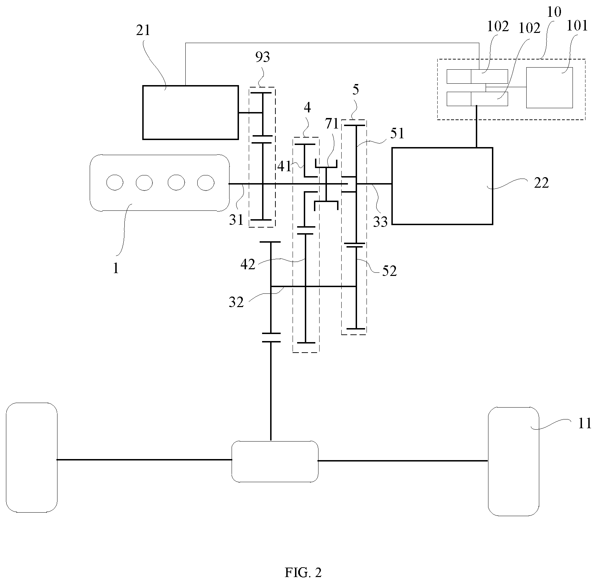

FIG. 2 is **an** example of a schematic structural diagram of a hybrid power system not falling within the subject-matter for which protection is sought. As shown in FIG. 2, the first speed change mechanism includes a first gear train 4 and a first synchronizer 71.

As shown in FIG. 2, an input gear 41 of the first gear train 4 is sleeved on the first input shaft 31, and an output gear 42 of the first gear train 4 is coaxially connected to the output shaft 32.

The first synchronizer 71 is sleeved on the first input shaft 31, and the first synchronizer 71 is configured to cause the input gear 41 of the first gear train 4 to be connected to the first input shaft 31 or cause the input gear 41 of the first gear train 4 to be disconnected from the first input shaft 31.

In the above implementations, the engine 1 is drivingly connected to the first input shaft 31, such that the kinetic energy of the engine 1 is output to the first input shaft 31, the first input shaft 31 is drivingly connected to the output shaft 32 via the first gear train 4, and the first synchronizer 71 is connected to the first input shaft 31. The first synchronizer 71 controls whether the input gear 41 of the first gear train 4 is connected to the first input shaft 31, and thus the kinetic energy output by the engine 1 is transmitted to the first gear train 4 and the output shaft 32 through the first input shaft 31 to drive the wheels 11.

In the case that the hybrid power system operates, the kinetic energy of the engine is transmitted to the output shaft through the first input shaft and the first gear train, and the kinetic energy of the second motor is transmitted to the output shaft through the second input shaft. In the process, the engine and the second motor do not drag the two input shafts to rotate simultaneously, such that the power source is prevented from being directly dragged to rotate, and the energy loss is avoided.

Meanwhile, the input gear 41 of the first gear train 4 is controlled to be disconnected from the first input shaft 31 by the first synchronizer 71. In this way, even if the power is transmitted to the first gear train 4 through the output shaft 32, the power is not transmitted to the first input shaft 31 continuously, that is, the first input shaft 31 is not indirectly dragged to rotate, and thus the engine is prevented from being dragged to rotate.

The first gear train 4 at least includes an input gear and an output gear, and the input gear is drivingly connected to the output gear, such that the power is transmitted to the output gear through the input gear.

The input gear and the output gear of the first gear train 4 are directly engaged to achieve transmission connection between the input gear and the output gear. In other examples, at least one connecting gear is further arranged between the input gear and the output gear. For example, in the case that only one connecting gear is arranged, the connecting gear is engaged with the input gear and the output gear to achieve transmission connection between the input gear and the output gear.

It should be noted that the specific quantity of gears to be arranged in the first gear train 4 is determined according to actual demands. Because the quantity of gears arranged in the gear train affects the transmission ratio of the gear train, the quantity of gears in the gear train is adjusted according to the power demand of a vehicle.

As shown in FIG. 2, the second speed change mechanism includes a second gear train 5, wherein an input gear 51 of the second gear train 5 is coaxially connected to the second input shaft 33, and an output gear 52 of the second gear train 5 is coaxially connected to the output shaft 32.

The second motor 22 is drivingly connected to the second input shaft 33, and the second input shaft 33 is drivingly connected to the output shaft 32 via the second gear train 5, such that the second motor 22 transmits power to the output shaft 32 only through the second gear train 5 to drive the wheels.

As shown in FIG. 2, the first input shaft 31 is coaxially spaced from the second input shaft 33, and the first synchronizer 71 is configured to cause at most one of the input gear 41 of the first gear train 4 and the input gear 51 of the second gear train 5 to be connected to the first input shaft 31.

The first synchronizer 71 is disposed between the input gear 41 of the first gear train 4 and the input gear 51 of the second gear train 5. The first synchronizer 71 is axially movable on the first input shaft 31, such that the first gear train 4 is drivingly connected to the first input shaft 31 in the case that the first synchronizer 71 approaches the first gear train 4 and is engaged with the input gear 41 of the first gear train 4.

As shown in FIG. 2, the input gear 51 of the second gear train 5 is disposed at one end of the second input shaft 33 opposite to the first input shaft 31, and one end of the first input shaft 31 opposite to the second input shaft 33 is movably inserted into the input gear 51 of the second gear train 5.

Because the second input shaft 33 is coaxially spaced from the first input shaft 31, and one end of the first input shaft 31 opposite to the second input shaft 33 is movably inserted into the input gear 51 of the second gear train 5. In this way, the first synchronizer 71 is also engaged with the input gear 51 of the second gear train 5 in the case that the first synchronizer 71 approaches the second gear train 5, and thus the second gear train 5 can be drivingly connected to the first input shaft 31. The first synchronizer 71 can also be disconnected from both the input gear 41 of the first gear train 4 and the input gear 51 of the second gear train 5, that is, the first input shaft 31 and the output shaft 32 are disconnected.

In the case that the first synchronizer 71 is engaged with the first gear train 4, the power of the engine 1 is transmitted to the output shaft 32 through the first gear train 4. Because the second motor 22 is drivingly connected to the input gear 51 of the second gear train 5 directly, there is no need to connect the input gear 51 via the first synchronizer 71. In this way, the second motor 22 is controlled to work, such that the power of the second motor 22 is transmitted to the output shaft 32 through the second gear train 5. In the hybrid power system, the engine 1 and the second motor 22 transmit power to the output shaft 32 through two gear trains, respectively, so that another gear can be used to drive the vehicle, improving the use efficiency of the gear trains and realizing a multi-gear driving mode of the hybrid power system.

The second gear train 5 at least includes an input gear and an output gear, and the input gear is drivingly connected to the output gear, such that the power is transmitted to the output gear through the input gear.

In some examples, in the second gear train 5, the input gear and the output gear are directly engaged. In some examples, at least one connecting gear is arranged between the input gear and the output gear.

It should be noted that the specific quantity of gears to be arranged in the second gear train 5 is determined based on actual demands.

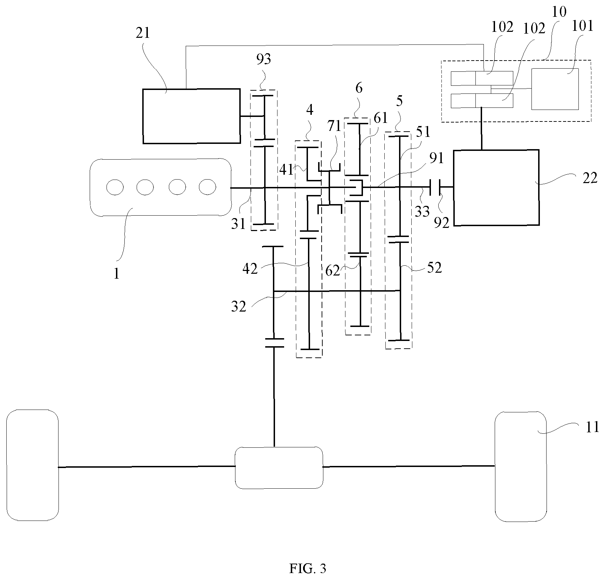

FIG. 3 is a schematic structural diagram of a hybrid power system according to an embodiment of the present invention. As shown in FIG. 3, the first speed change mechanism further includes a third gear train 6, wherein an input gear 61 of the third gear train 6 is sleeved on the first input shaft 31, and an output gear 62 of the third gear train 6 is coaxially connected to the output shaft 32.

As shown in FIG. 3, the first synchronizer 71 is disposed between the input gear 41 of the first gear train 4 and the input gear 61 of the third gear train 6, and the first synchronizer 71 is configured to cause at most one of the input gear 41 of the first gear train 4 and the input gear 61 of the third gear train 6 to be connected to the first input shaft 31.

In the above implementations, the first gear train 4 and the third gear train 6 are connected to the first input shaft 31 and the output shaft 32 simultaneously, and the first synchronizer 71 is disposed between the first gear train 4 and the third gear train 6. In this way, in the case that the first synchronizer 71 moves to one place and is engaged with the input gear 41 of the first gear train 4, the first gear train 4 is connected to the first input shaft 31, such that the power of the engine 1 is transmitted to the output shaft 32 through the first gear train 4. Meanwhile, in the case that the first synchronizer 71 moves to another place and is engaged with the input gear 61 of the third gear train 6, the third gear train 6 is connected to the first input shaft 31, such that the power of the engine 1 is transmitted to the output shaft 32 through the third gear train 6, and the engine 1 drives the vehicle in two gears.

As shown in FIG. 3, the second speed change mechanism includes a second gear train 5, wherein an input gear 51 of the second gear train 5 is coaxially connected to the second input shaft 33, and an output gear 52 of the second gear train 5 is coaxially connected to the output shaft 32.

The second motor 22 is drivingly connectable to the second input shaft 33, and the second input shaft 33 is drivingly connected to the output shaft 32 via the second gear train 5, such that the second motor 22 can transmit power to the output shaft 32 independently through the second gear train 5 to drive the wheels.

As shown in FIG. 3, the first input shaft 31 is coaxially spaced from the second input shaft 33, and the second speed change mechanism B further includes a support shaft 91, wherein a first end of the support shaft 91 is movably connected to a first end of the first input shaft 31 in the circumferential direction, a second end of the first input shaft 31 is drivingly connected to the engine 1, and a second end of the support shaft 91 is coaxially connected to the second input shaft 33; and the input gear 61 of the third gear train 6 is sleeved on the support shaft 91.

As shown in FIG. 3, a sleeve coaxially connected to the support shaft 91 is arranged at the first end of the support shaft 91, one end of the sleeve is open, and one end of the sleeve is opposite to the first end of the first input shaft 31. During assembly, the first end of the first input shaft 31 is coaxially inserted into the sleeve of the support shaft 91 to achieve the circumferential movable connection between the first input shaft 31 and the support shaft 91.

According to the invention, a bearing is disposed in the sleeve, an outer ring of the bearing is connected to an inner wall of the sleeve, and an inner ring of the bearing is configured to be sleeved on the first input shaft 31, such that the first input shaft 31 rotates more stably in the sleeve, and the connection stability between the first input shaft 31 and the support shaft 91 is improved.

In the above implementations, the support shaft 91 is arranged, in the case that the support shaft 91 is connected to the first input shaft 31, the first input shaft 31 and the support shaft 91 form a whole portion, and both ends of the whole portion are supported by the engine 1 and the second motor 22 respectively. Therefore, the first end of the first input shaft 31 is prevented from being additionally provided with a supporting structure to support the first input shaft 31, such that the cost is saved, the axial size of the hybrid power system is reduced, and the hybrid power system is more compact and lightweight.

Meanwhile, the connection position of the first input shaft 31 and the support shaft 91 is in an inner hole of the input gear 61 of the third gear train 6, such that the first input shaft 31 and the support shaft 91 are not easy to separate and fall off upon being assembled. Meanwhile, the sleeve is arranged in the inner hole of the input gear 61 of the third gear train 6, which avoids occupying excessive internal space of the vehicle and makes the structure of the hybrid power system more compact.

The third gear train 6 at least includes an input gear and an output gear, and the input gear is drivingly connected to the output gear, such that the power is transmitted to the output gear through the input gear.

In some embodiments, in the third gear train 6, the input gear and the output gear are directly engaged. In some embodiments, at least one connecting gear is arranged between the input gear and the output gear.

It should be noted that the specific quantity of gears to be arranged in the third gear train 6 is determined according to actual demands.

As shown in FIG. 3, the second speed change mechanism further includes a clutch 92, wherein the clutch 92 is disposed between the input gear 51 of the second gear train 5 and the second motor 22.

The arrangement of the clutch 92 between the second motor 22 and the input gear 51 of the second gear train 5 interrupts the power transmission path therebetween. In the case that only the engine 1 needs to work, the power of the engine 1 is not transmitted to the second motor 22 through the second gear train 5 to drag the second motor 22 to rotate, and thus the power loss is avoided.

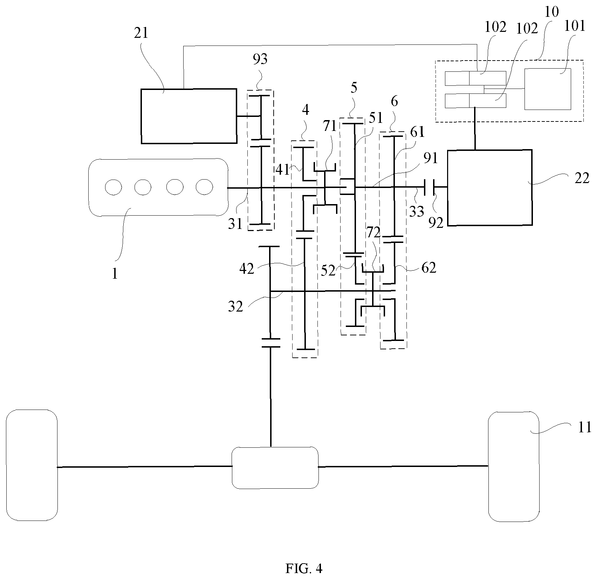

FIG. 4 is an example of a schematic structural diagram of a hybrid power system not falling within the subject-matter for which protection is sought. As shown in FIG. 4, the second speed change mechanism includes a second gear train 5, a third gear train 6, and a second synchronizer 72.

As shown in FIG. 4, an input gear 51 of the second gear train 5 and an input gear 61 of the third gear train 6 are coaxially connected to the second input shaft 33, and an output gear 52 of the second gear train 5 and an output gear 62 of the third gear train 6 are sleeved on the output shaft 32.

The first input shaft 31 is coaxially spaced from the second input shaft 33, and the first synchronizer 71 is configured to cause at most one of the input gear 41 of the first gear train 4 and the input gear 51 of the second gear train 5 to be connected to the first input shaft 31.

As shown in FIG. 4, the second synchronizer 72 is sleeved on the output shaft 32, and the second synchronizer 72 is configured to be drivingly connected to at most one of the output gear 52 of the second gear train 5 and the output gear 62 of the third gear train 6.

In the above implementations, the first synchronizer 71 is connected to the input gear 41 of the first gear train 4 or the input gear 51 of the second gear train 5, such that the kinetic energy output by the engine 1 can be transmitted to the output shaft 32 through the first gear train 4 and the second gear train 5, respectively, and thus the engine 1can drive the vehicle in two gears.

The input gear 51 of the second gear train 5 is coaxially connected to the second input shaft 33, in the case that the first synchronizer 71 is connected to the input gear 51 of the second gear train 5, the first input shaft 31 is drivingly connected to the second input shaft 33. That is, the power of the engine 1 is also transmitted to the second input shaft 33, and the power of the engine 1 is transmitted to the output shaft 32 through the third gear train 6 in addition to the power of the engine 1 being transmitted to the output shaft 32 through the second gear train 5, such that the engine 1 is additionally provided with a gear, and the engine 1 cab drive the vehicle in three gears.

Exemplarily, in the case that the engine 1 drives the vehicle in the first gear, the first synchronizer 71 is connected to the input gear 41 of the first gear train 4, and the power of the engine 1 is transmitted to the output shaft 32 through the first gear train 4 to drive the vehicle.

Exemplarily, in the case that the engine 1 drives the vehicle in the second gear, the first synchronizer 71 is connected to the input gear 51 of the second gear train 5, and the second synchronizer 72 is connected to the output gear 52 of the second gear train 5, and the power of the engine 1 is transmitted to the output shaft 32 through the second input shaft 33 and the second gear train 5 to drive the vehicle.

Exemplarily, in the case that the engine 1 drives the vehicle in the third gear, the first synchronizer 71 is connected to the input gear 51 of the second gear train 5, and the second synchronizer 72 is connected to the output gear 62 of the third gear train 6, and the power of the engine 1 is transmitted to the output shaft 32 through the second input shaft 33 and the third gear train 6 to drive the vehicle.

As shown in FIGS. 2 and 3, the hybrid power system further includes a fourth gear train 93, wherein the first motor 21 is coaxially connected to an input gear of the fourth gear train 93, an output gear of the fourth gear train 93 is coaxially connected to the first input shaft 31, and the input gear of the fourth gear train 93 is disposed between the engine 1 and the input gear 41 of the first gear train 4.

The first motor 21 is connected to the first input shaft 31 via the fourth gear train 93, such that the power of the second motor 22 is transmitted to the first input shaft 31. The arrangement of the first motor 21 assists the engine 1 to drive the vehicle together so as to provide sufficient power for the vehicle.

Meanwhile, the first motor 21, like the engine 1, transmits power to the output shaft 32 through the first gear train 4 or the second gear train 5 by switching of the first synchronizer 71. Thus, the vehicle is driven in two gears.

In the embodiments of the present disclosure, the fourth gear train 93 at least includes an input gear and an output gear, and the input gear is drivingly connected to the output gear, such that the power is transmitted to the output gear through the input gear.

In some embodiments, in the fourth gear train 93, the input gear and the output gear are directly engaged. In some embodiments, at least one connecting gear is arranged between the input gear and the output gear.

It should be noted that the specific quantity of gears to be arranged in the fourth gear train 93 is determined based on actual demands.

As shown in FIGS. 2 and 3, a power supply assembly 10 includes a battery 101 and two inverters 102, wherein the two inverters 102 are connected to the battery 101. The first motor 21 is connected to one of the two inverters 102, and the second motor 22 is connected to the other of the two inverters 102.

The two inverters 102 are arranged, one of the two inverters is configured to cause the battery 101 to be connected to the first motor 21, and the other inverter is configured to cause the battery 101 to be connected to the second motor 22. The battery 101 is a rechargeable battery 101, and the inverter 102 is arranged on an output circuit of the battery 101 and is configured to convert a direct current output by the battery 101 into a three-phase alternating current to drive the first motor 21 or the second motor 22.

Examples, not falling within the subject-matter for which protection is sought, provide a control method including:
controlling a first speed change mechanism to cause a first input shaft to be connected to an output shaft, controlling a second speed change mechanism to cause a second input shaft to be disconnected from the output shaft, and controlling at least one of an engine and a first motor to rotate; or
controlling the first speed change mechanism to cause the first input shaft to be disconnected from the output shaft, controlling the second speed change mechanism to cause the second input shaft to be connected to the output shaft, and controlling the second motor to rotate.

In this way, the kinetic energy output by the engine and the two motors is transmitted to the output shaft through the two speed change mechanisms, such that the purpose of driving a vehicle to travel is achieved. In the single motor mode that only a motor needs to work, the two speed change mechanisms are controlled to achieve the purpose of working only by the second motor, and the power of the second motor is directly transmitted to the second input shaft, thus the engine and the first motor are not directly dragged by the second input shaft to rotate, and the energy loss is avoided, thereby increasing the transmission efficiency.

In some embodiments, the hybrid power system also controls the operation of the power source of the vehicle based on the power mode. The specific control method includes determining a power mode; and controlling the working states of the engine, the first motor and the second motor based on the power mode.

In the embodiments of the present disclosure, the power mode of the hybrid power system includes an electric-only mode, an engine-only mode, a hybrid mode, or a power recovery mode.

In the hybrid power system shown in FIG. 2, the engine, the first motor, the second motor and the first synchronizer operate in the following working states in different power modes.

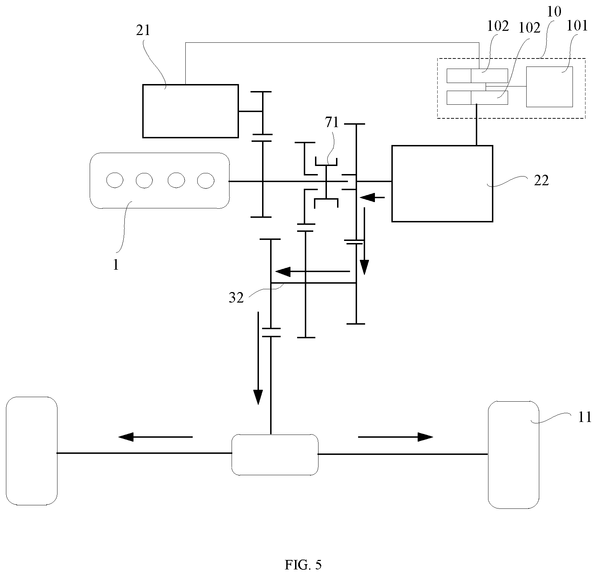

FIG. 5 is a schematic diagram of the power transfer of a hybrid power system in an electric-only mode. As shown in FIG. 5, in the case that the power mode of the hybrid power system is an electric-only mode, the engine 1 and the first motor 21 do not operate, and the first synchronizer 71 is not connected to the input gear 41 of the first gear train 4 and the input gear 51 of the second gear train 5, while the second motor 22 operates.

In this way, the engine 1 and the first motor 21 do not operate, the first synchronizer 71 is in the neutral position, and the vehicle is driven to travel by the second motor 22. The power supply assembly 10 discharges, the direct current is converted into a three-phase alternating current through the inverter 102 to drive the output shaft of the second motor 22 to rotate, the second motor 22 converts the electric energy into the mechanical energy, and the mechanical energy is transmitted to the wheels 11 through the second gear train 5, the output shaft 32 and the differential, such that the mode of driving the vehicle to travel by the second motor 22 alone is achieved.

In some examples, not falling within the subject-matter for which protection is sought, the vehicle is also driven in reverse gear by the second motor 22 in the electric-only mode. During reverse, the engine 1 and the first motor 21 do not operate, and the second motor 22 anticlockwise rotates to achieve reverse. In this mode, the energy transfer path is seen in FIG. 4.

In some examples, not falling within the subject-matter for which protection is sought, in the case that the power mode of the hybrid power system is an engine-only mode, the engine 1 operates, the first motor 21 and the second motor 22 do not operate, and the first synchronizer 71 is connected to the input gear 41 of the first gear train 4 or the input gear 51 of the second gear train 5.

At the moment, the first synchronizer 71 is in the left or right position, and the vehicle is driven to travel by the engine 1. The torque of the engine 1 is transmitted to the output shaft 32 through the first gear train 4 or the second gear train 5, and the mode of driving the vehicle to travel in two gears by the engine 1 is achieved.

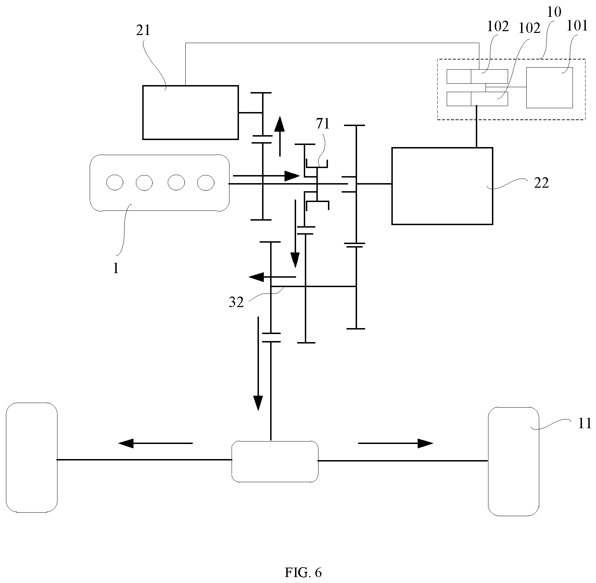

Taking the first synchronizer 71 moving to the left position as an example, FIG. 6 is a schematic diagram of the power transfer of a hybrid power system in an engine-only mode. As shown in FIG. 6, the first gear train 4 is connected to the first input shaft 31, and the torque of the engine 1 is transmitted to the wheels 11 through the first gear train 4, the output shaft 32 and the differential, such that the mode of driving the vehicle to travel by the engine 1 alone is achieved.

Exemplarily, at the moment, the engine 1 also drives the first motor 21 to rotate, so as to cause the first motor 21 to enter a power generation state to charge the power supply assembly 10.

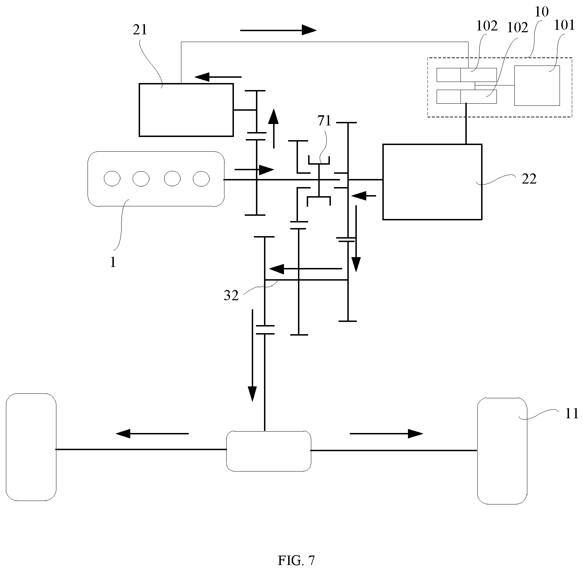

FIG. 7 is an example of a schematic diagram of the power transfer of a hybrid power system not falling within the subject-matter for which protection is sought. As shown in FIG. 7, in the case that the power mode of the hybrid power system is a hybrid mode, the engine 1 drives the first motor 21 to generate electricity, and the first synchronizer 71 is not connected to the input gear 41 of the first gear train 4 and the input gear 51 of the second gear train 5, while the second motor 22 operates.

In this way, the first synchronizer 71 is in a neutral position, the engine 1 operates in a high-efficiency area to drive the first motor 21 to generate electricity, the generated electricity is supplied to the second motor 22 to drive the vehicle to travel, and excess electricity is stored in the power supply assembly 10. In the case that the power generation amount is insufficient and is supplemented by the power supply assembly 10, the first motor 21 and the power supply assembly 10 jointly meet the electric quantity demand of the second motor 22. As shown in FIG. 7, the power output by the second motor 22 is transmitted to the wheels 11 through the second gear train 5, the output shaft 32 and the differential to drive the vehicle to travel.

In the case that the power mode of the hybrid power system is a hybrid mode, the engine 1 and the first motor 21 operate, and the first synchronizer 71 is connected to the input gear 41 of the first gear train 4 or the input gear 51 of the second gear train 5, while the second motor 22 operates.

In this way, the first synchronizer 71 is in the left or right position, and the engine 1, the second motor 22 and the first motor 21 jointly drive the vehicle to travel. The torque of the engine 1 and the first motor 21 is transmitted to the output shaft 32 through the first gear train 4 or the second gear train 5, and the torque of the second motor 22 is transmitted to the output shaft 32 through the second gear train 5, such that the mode of jointly driving the vehicle by the engine 1 and the two motors is achieved.

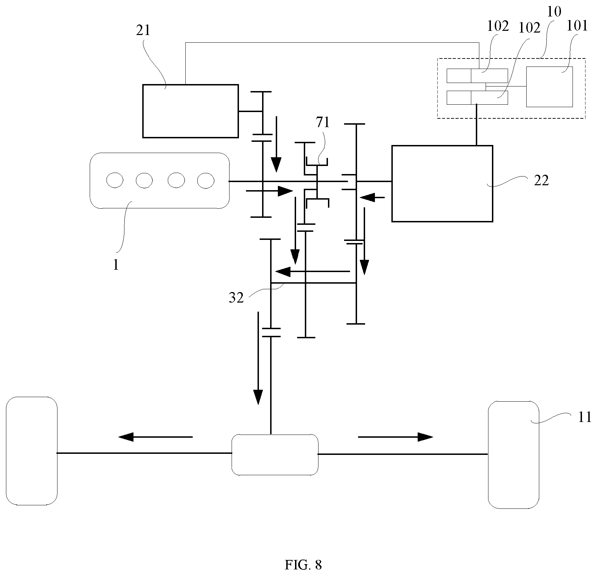

FIG. 8 is a schematic diagram of the power transfer taking the first synchronizer 71 moving to the left position. As shown in FIG. 8, the first gear train 4 is connected to the first input shaft 31, the torque of the engine 1 and the first motor 21 is transmitted to the wheels 11 through the first gear train 4, the output shaft 32 and the differential, and the torque of the first motor 21 is transmitted to the wheels 11 through the second gear train 5, the output shaft 32 and the differential, so as to achieve the purpose of jointly driving the vehicle to travel by the three power sources.

In this mode, the power of the engine 1 and the first motor 21 is transmitted out of the output shaft 32 through the first gear train 4. The power of the second motor 22 is transmitted to the output shaft 32 through the second gear train 5. The engine 1, the first motor 21 and the second motor 22 transmit power to the output shaft 32 through two gear trains, so another gear is used to drive the vehicle, improving the use efficiency of the gear trains, and realizing a multi-gear driving mode of the hybrid power system.

In the case that the power mode of the hybrid power system is a hybrid mode, the engine 1 and the first motor 21 operate, and the first synchronizer 71 is connected to the input gear 41 of the first gear train 4 or the input gear 51 of the second gear train 5, while the second motor 22 does not operate.

In this way, the first synchronizer 71 is in the left or right position, and the vehicle is driven to travel by the engine 1 and the first motor 21 together. The power supply assembly 10 discharges, the direct current is converted into a three-phase alternating current through the inverter 102 to drive the first motor 21 to rotate, and the first motor 21 is in a power generation or electric state according to the vehicle speed and torque requirements. The torque of the engine 1 and the first motor 21 is transmitted to the wheels 11 through the first gear train 4 or the second gear train 5, the output shaft 32 and the differential, and the mode of jointly driving the vehicle to travel in two gears by two power sources is achieved.

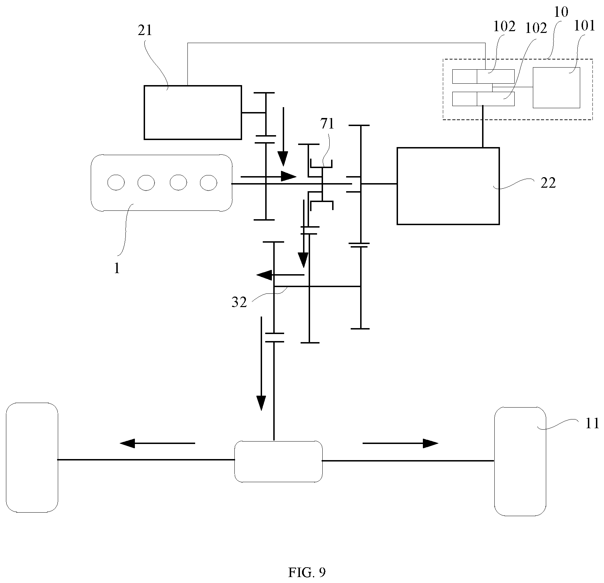

FIG. 9 is a schematic diagram of the power transfer taking the first synchronizer 71 moving to the left position. As shown in FIG. 9, the engine 1 and the first motor 21 operate, while the second motor 22 does not operate, the vehicle is driven to start and travel by the power supplied from the engine 1, and the first motor 21 operates in a power generation or electric mode according to the vehicle speed and torque requirements.

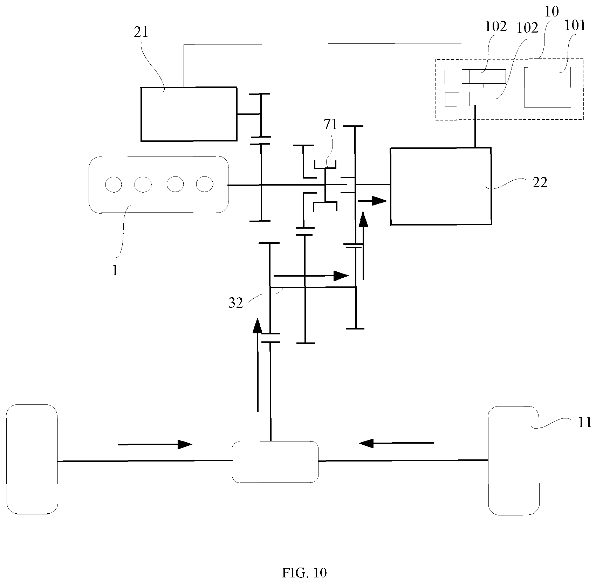

FIG. 10 is a schematic diagram of the power transfer of a hybrid power system in a power recovery mode. As shown in FIG. 10, in the case that the power mode of the hybrid power system is an energy recovery mode, the engine 1 and the first motor 21 do not operate, and the first synchronizer 71 is not connected to the input gear 41 of the first gear train 4 and the input gear 51 of the second gear train 5, while the second motor 22 generates electricity.

In this mode, the vehicle is in a coasting or braking condition, the wheels 11 provide reverse torque, and a part of kinetic energy of the vehicle is transmitted to the second motor 22 through the differential, the output shaft 32 and the second gear train 5 to be converted into electric energy, which is stored in the power supply assembly 10 for later use, so as to achieve the energy recovery function of the second motor 22.

In the hybrid power system shown in FIG. 3, the engine, the first motor, the second motor and the first synchronizer operate in the following working states in different power modes.

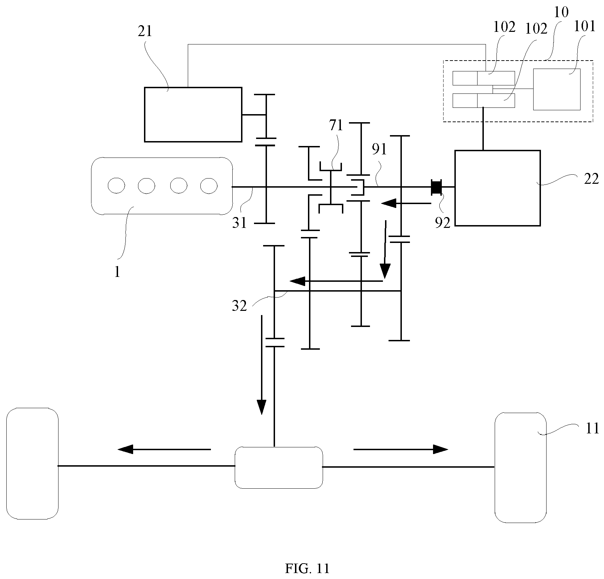

FIG. 11 is a schematic diagram of the power transfer of a hybrid power system in an electric-only mode according to some embodiments of the present disclosure. As shown in FIG. 11, in the case that the power mode of the hybrid power system is an electric-only mode, the engine 1 and the first motor 21 do not operate, and the first synchronizer 71 is not connected to the input gear 41 of the first gear train 4 and the input gear 51 of the second gear train 5, while the second motor 22 operates, and the clutch 92 is engaged.

In this way, the engine 1 and the first motor 21 do not operate, the first synchronizer 71 is in the neutral position, the clutch 92 is engaged, and the vehicle is driven to travel by the second motor 22. The power supply assembly 10 discharges, the direct current is converted into a three-phase alternating current through the inverter 102 to drive the output shaft of the second motor 22 to rotate, the second motor 22 converts the electric energy into the mechanical energy, and the mechanical energy is transmitted to the wheels 11 through the clutch 92, the third gear train 6, the output shaft 32 and the differential, such that the mode of driving the vehicle to travel by the second motor 22 alone is achieved.

In some embodiments, the vehicle is also driven in reverse gear by the second motor 22 in the electric-only mode. During reverse, the engine 1 and the first motor 21 do not operate, and the second motor 22 anticlockwise rotates to achieve reverse. In this mode, the energy transfer path is seen in FIG. 10.

In some embodiments, in the case that the power mode of the hybrid power system is an engine-only mode, the engine 1 operates, the second motor 22 and the first motor 21 do not operate, the first synchronizer 71 is connected to the input gear 41 of the first gear train 4 or the input gear 51 of the second gear train 5, and the clutch 92 is disengaged.

In this way, the first synchronizer 71 is in the left or right position, the clutch 92 is disengaged, and the vehicle is driven to travel by the engine 1. The torque of the engine 1 is transmitted to the output shaft 32 through the first gear train 4 or the second gear train 5, and the mode of driving the vehicle to travel in two gears by the engine 1 is achieved.

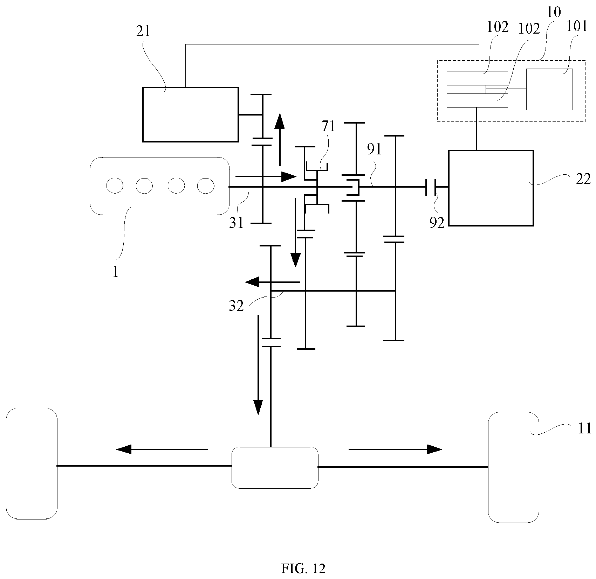

Taking the first synchronizer 71 moving to the left position as an example, FIG. 12 is a schematic diagram of the power transfer of a hybrid power system in an engine-only mode according to some embodiments of the present disclosure. As shown in FIG. 12, the first gear train 4 is connected to the first input shaft 31, and the torque of the engine 1 is transmitted to the wheels 11 through the first gear train 4, the output shaft 32 and the differential, such that the mode of driving the vehicle to travel by the engine 1 alone is achieved.

Exemplarily, at the moment, the engine 1 also drives the first motor 21 to rotate, so as to cause the first motor 21 to enter a power generation state to charge the power supply assembly 10.

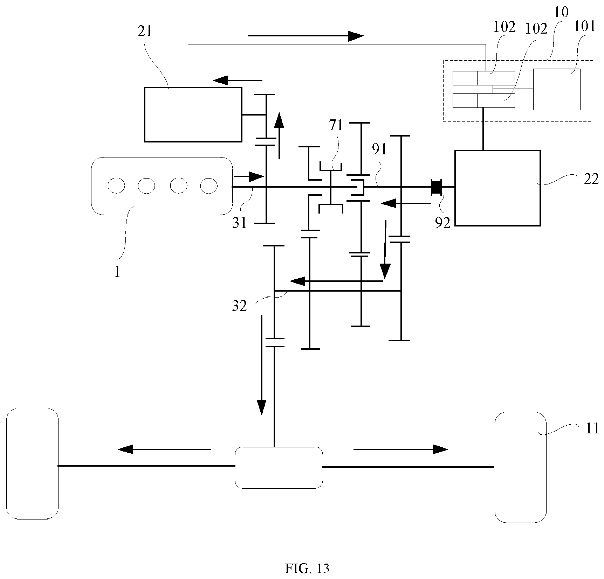

FIG. 13 is a schematic diagram of the power transfer of a hybrid power system in a hybrid mode according to some embodiments of the present disclosure. As shown in FIG. 13, in the case that the power mode of the hybrid power system is a hybrid mode, the engine 1 drives the first motor 21 to generate electricity, and the first synchronizer 71 is not connected to the input gear 41 of the first gear train 4 and the input gear 51 of the second gear train 5, while the second motor 22 operates, and the clutch 92 is engaged.

In this way, the first synchronizer 71 is in a neutral position, the clutch 92 is engaged, the engine 1 operates in a high-efficiency area to drive the first motor 21 to generate electricity, the generated electricity is supplied to the second motor 22 to drive the vehicle to travel, and excess electricity is stored in the power supply assembly 10. In the case that the power generation amount is insufficient and is supplemented by the power supply assembly 10, the first motor 21 and the power supply assembly 10 jointly meet the electric quantity demand of the second motor 22. As shown in FIG. 12, the power output by the second motor 22 is transmitted to the wheels 11 through the clutch 92, the third gear train 6, the output shaft 32 and the differential to drive the vehicle to travel.

In some embodiments, in the case that the power mode of the hybrid power system is a hybrid mode, the engine 1 and the first motor 21 operate, and the first synchronizer 71 is connected to the input gear 41 of the first gear train 4 or the input gear 51 of the second gear train 5, while the second motor 22 operates, and the clutch 92 is engaged.

In this way, the first synchronizer 71 is in the left or right position, the clutch 92 is engaged, and the vehicle is driven to travel by the engine 1, the second motor 22 and the first motor 21 together. The torque of the engine 1 and the first motor 21 is transmitted to the output shaft 32 through the first gear train 4 or the second gear train 5, the torque of the second motor 22 is transmitted to the output shaft 32 through the clutch 92 and the third gear train 6, and the mode of driving the vehicle to travel by the engine 1 and the two motors together is achieved.

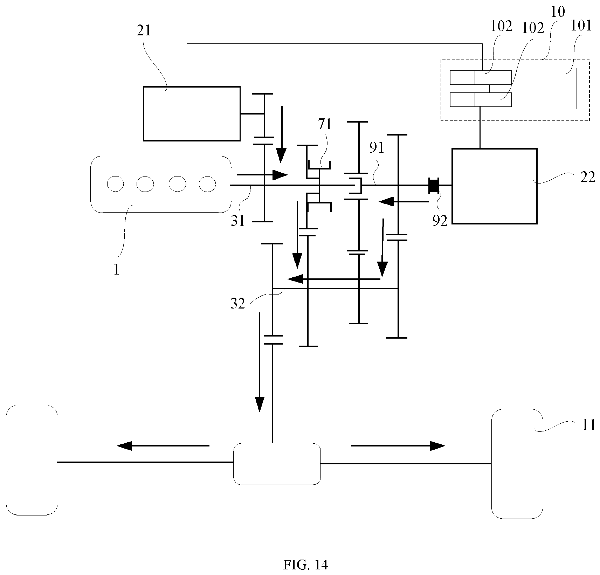

Taking the first synchronizer 71 moving to the left position as an example, FIG. 14 is a schematic diagram of the power transfer of a hybrid power system in a hybrid mode according to some embodiments of the present disclosure. As shown in FIG. 14, the first gear train 4 is connected to the first input shaft 31, at the moment, the torque of the engine 1 and the first motor 21 is transmitted to the wheels 11 through the first gear train 4, the output shaft 32 and the differential, and the torque of the first motor 21 is transmitted to the wheels 11 through the clutch 92, the third gear train 6, the output shaft 32 and the differential, so as to achieve the purpose of jointly driving the vehicle to travel by the three power sources

In this mode, the power of the engine 1 and the first motor 21 is transmitted out of the output shaft 32 through the first gear train 4, and the power of the second motor 22 is transmitted to the output shaft 32 through the third gear train 6. The engine 1, the first motor 21 and the second motor 22 transmit power to the output shaft 32 through two gear trains, improving the use efficiency of the gear trains, and realizing a multi-gear driving mode of the hybrid power system.

In some embodiments, in the case that the power mode of the hybrid power system is the hybrid mode, the engine 1 and the first motor 21 operate, and the first synchronizer 71 is connected to the input gear 41 of the first gear train 4 or the input gear 51 of the second gear train 5, while the second motor 22 does not operate, and the clutch 92 is disengaged.

In this way, the first synchronizer 71 is in the left or right position, and the vehicle is driven to travel by the engine 1 and the first motor 21 together. The power supply assembly 10 discharges, the direct current is converted into a three-phase alternating current through the inverter 102 to drive the first motor 21 to rotate, and the first motor 21 is in a power generation or electric state according to the vehicle speed and torque requirements. The torque of the engine 1 and the first motor 21 is transmitted to the wheels 11 through the first gear train 4 or the second gear train 5, the output shaft 32 and the differential, and the mode of jointly driving the vehicle to travel in two gears by two power sources is achieved.

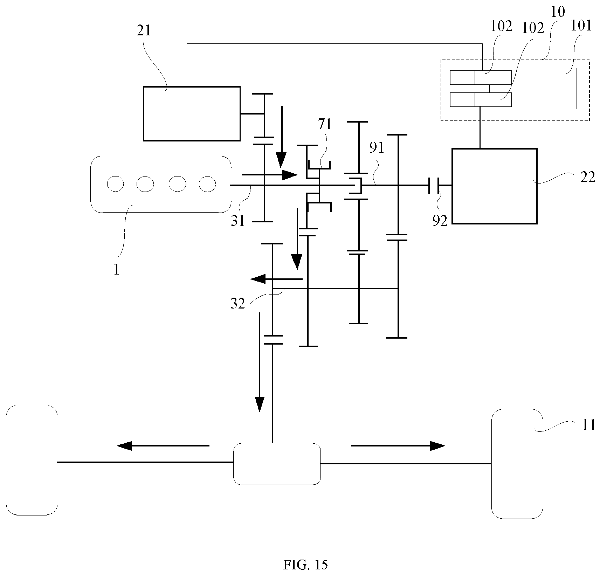

Taking the first synchronizer 71 moving to the left position as an example, FIG. 15 is a schematic diagram of the power transfer of a hybrid power system in a hybrid mode according to some embodiments of the present disclosure. As shown in FIG. 15, the engine 1 and the first motor 21 operate, while the second motor 22 does not operate, the vehicle is driven to start and travel by the power supplied from the engine 1, and the first motor 21 operates in a power generation or electric mode according to the vehicle speed and torque requirements.

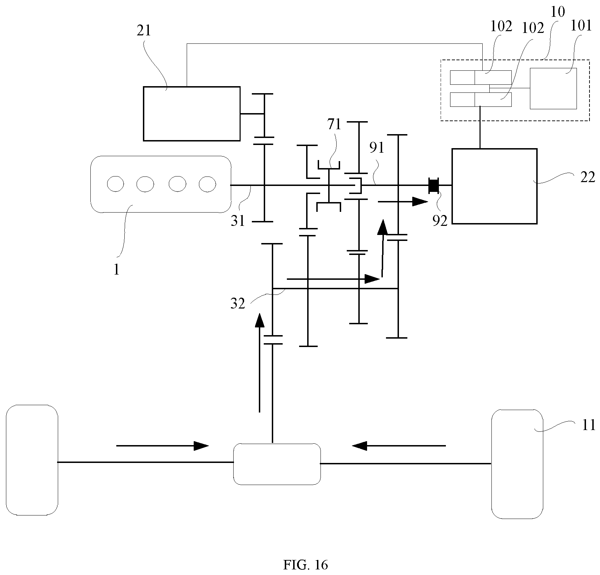

FIG. 16 is a schematic diagram of the power transfer of a hybrid power system in a power recovery mode according to some embodiments of the present disclosure. As shown in FIG. 16, in the case that the power mode of the hybrid power system is an energy recovery mode, the engine 1 and the first motor 21 do not operate, and the first synchronizer 71 is not connected to the input gear 41 of the first gear train 4 and the input gear 51 of the second gear train 5, while the second motor 22 generates electricity, and the clutch 92 is engaged.

In this mode, in the case that the vehicle is in a coasting or braking condition, the wheels 11 provide reverse torque, and a part of kinetic energy of the vehicle is transmitted to the second motor 22 through the differential, the output shaft 32, the third gear train 6 and the clutch 92 to be converted into electric energy, which is stored in the power supply assembly 10 for later use, so as to achieve the energy recovery function of the second motor 22.

## Claims

1. A hybrid power system, comprising: a gearbox, an engine (1), a first motor (21), and a second motor (22); wherein the gearbox comprises a first input shaft (31), an output shaft (32), a second input shaft (33), a first speed change mechanism, and a second speed change mechanism, wherein the first input shaft (31) is connected to the output shaft (32) via the first speed change mechanism, the second input shaft (33) is connected to the output shaft (32) via the second speed change mechanism, and the first input shaft (31) is coaxially spaced from the second input shaft (33);
wherein the engine (1) and the first motor (21) are drivingly connected to the first input shaft (31);
wherein the second motor (22) is drivingly connectable to the second input shaft (33);
the first speed change mechanism comprises a first gear train (4), a first synchronizer (71) and a third gear train (6); wherein an input idle gear of the first gear train (4) is on the first input shaft (31), an output gear of the first gear train (4) is coaxially fixed to the output shaft (32), an output gear of the third gear train (6) is coaxially fixed to the output shaft (32), the first synchronizer (71) is sleeved on the first input shaft (31), the first synchronizer (71) is disposed between the input idle gear of the first gear train (4) and an input idle gear of the third gear train (6), and the first synchronizer (71) is configured to cause at most one of the input idle gear of the first gear train (4) and the input idle gear of the third gear train (6) to be connected to the first input shaft (31);
the second speed change mechanism comprises a second gear train (5), a support shaft (91) and a clutch (92), wherein an input gear of the second gear train (5) is coaxially fixed to the second input shaft (33), an output gear of the second gear train (5) is coaxially fixed to the output shaft (32), the clutch (92) is disposed between the input gear of the second gear train (5) and the second motor (22), a first end of the support shaft (91) is movably connected to a first end of the first input shaft (31) in a circumferential direction, a second end of the first input shaft (31) is drivingly connected to the engine (1), and a second end of the support shaft (91) is coaxially fixed to the second input shaft (33); and the input idle gear of the third gear train (6) is on the support shaft (91); and
a sleeve coaxially fixed to the support shaft (91) is arranged at the first end of the support shaft (91), one end of the sleeve is open, and the sleeve is opposite to the first end of the first input shaft (31), and a bearing is arranged in the sleeve, wherein an outer ring of the bearing is connected to an inner wall of the sleeve, and an inner ring of the bearing is sleeved on the first end of the first input shaft (31).

2. The hybrid power system according to claim 1, wherein the input gear of the second gear train (5) is disposed at one end of the second input shaft (33) opposite to the first input shaft (31).

3. The hybrid power system according to any one of claims 1 or 2, wherein the gearbox further comprises a fourth gear train (93), wherein the first motor (21) is coaxially fixed to an input gear of the fourth gear train (93), and an output gear of the fourth gear train (93) is fixed connected to the first input shaft (31).

4. The hybrid power system according to any one of claims 1 or 2, further comprising: a power supply assembly (10), wherein the power supply assembly (10) comprises a battery (101) and two inverters (102), the two inverters (102) being connected to the battery (101), the first motor (21) being connected to one of the two inverters (102), and the second motor (22) being connected to the other of the two inverters (102).

5. A vehicle, comprising the hybrid power system as defined in any one of claims 1 to 4.

## Patentansprüche

1. Hybridantriebssystem, umfassend: ein Getriebe, einen Verbrennungsmotor (1), einen ersten Motor (21) und einen zweiten Motor (22); wobei das Getriebe eine erste Eingangswelle (31), eine Ausgangswelle (32), eine zweite Eingangswelle (33), einen ersten Gangwechselmechanismus und einen zweiten Gangwechselmechanismus umfasst, wobei die erste Eingangswelle (31) über den ersten Gangwechselmechanismus mit der Ausgangswelle (32) verbunden ist, die zweite Eingangswelle (33) über den zweiten Gangwechselmechanismus mit der Ausgangswelle (32) verbunden ist und die erste Eingangswelle (31) von der zweiten Eingangswelle (33) koaxial beabstandet ist;
wobei der Verbrennungsmotor (1) und der erste Motor (21) mit der ersten Eingangswelle (31) antriebsverbunden sind;
wobei der zweite Motor (22) mit der zweiten Eingangswelle (33) antriebsverbindbar ist;
der erste Gangwechselmechanismus ein erstes Zahnradgetriebe (4), eine erste Synchronisiereinrichtung (71) und ein drittes Zahnradgetriebe (6) umfasst; wobei sich ein Eingangslosrad des ersten Zahnradgetriebes (4) auf der ersten Eingangswelle (31) befindet, ein Ausgangszahnrad des ersten Zahnradgetriebes (4) koaxial an der Ausgangswelle (32) befestigt ist, ein Ausgangszahnrad des dritten Zahnradgetriebes (6) koaxial an der Ausgangswelle (32) befestigt ist, die erste Synchronisiereinrichtung (71) auf die erste Eingangswelle (31) aufgeschoben ist, die erste Synchronisiereinrichtung (71) zwischen dem Eingangslosrad des ersten Zahnradgetriebes (4) und einem Eingangslosrad des dritten Zahnradgetriebes (6) angeordnet ist und die erste Synchronisiereinrichtung (71) ausgebildet ist, zu veranlassen, dass höchstens eines von dem Eingangslosrad des ersten Zahnradgetriebes (4) und dem Eingangslosrad des dritten Zahnradgetriebes (6) mit der ersten Eingangswelle (31) verbunden wird;
der zweite Gangwechselmechanismus ein zweites Zahnradgetriebe (5), eine Stützwelle (91) und eine Kupplung (92) umfasst, wobei ein Eingangszahnrad des zweiten Zahnradgetriebes (5) koaxial an der zweiten Eingangswelle (33) befestigt ist, ein Ausgangszahnrad des zweiten Zahnradgetriebes (5) koaxial an der Ausgangswelle (32) befestigt ist, die Kupplung (92) zwischen dem Eingangszahnrad des zweiten Zahnradgetriebes (5) und dem zweiten Motor (22) angeordnet ist, ein erstes Ende der Stützwelle (91) mit einem ersten Ende der ersten Eingangswelle (31) in einer Umfangsrichtung beweglich verbunden ist, ein zweites Ende der ersten Eingangswelle (31) mit dem Verbrennungsmotor (1) antriebsverbunden ist und ein zweites Ende der Stützwelle (91) koaxial an der zweiten Eingangswelle (33) befestigt ist; und sich das Eingangslosrad des dritten Zahnradgetriebes (6) auf der Stützwelle (91) befindet; und
eine Hülse, die koaxial an der Stützwelle (91) befestigt ist, an dem ersten Ende der Stützwelle (91) angeordnet ist, ein Ende der Hülse offen ist und die Hülse dem ersten Ende der ersten Eingangswelle (31) gegenüberliegt, und ein Lager in der Hülse angeordnet ist, wobei ein Außenring des Lagers mit einer Innenwand der Hülse verbunden ist und ein Innenring des Lagers auf das erste Ende der ersten Eingangswelle (31) aufgeschoben ist.

2. Hybridantriebssystem nach Anspruch 1, wobei das Eingangszahnrad des zweiten Zahnradgetriebes (5) an einem Ende der zweiten Eingangswelle (33), das der ersten Eingangswelle (31) gegenüberliegt, angeordnet ist.

3. Hybridantriebssystem nach einem der Ansprüche 1 oder 2, wobei das Getriebe weiter ein viertes Zahnradgetriebe (93) umfasst, wobei der erste Motor (21) koaxial an einem Eingangszahnrad des vierten Zahnradgetriebes (93) befestigt ist und ein Ausgangszahnrad des vierten Zahnradgetriebes (93) fest mit der ersten Eingangswelle (31) verbunden ist.

4. Hybridantriebssystem nach einem der Ansprüche 1 oder 2, weiter umfassend: eine Stromversorgungsanordnung (10), wobei die Stromversorgungsanordnung (10) eine Batterie (101) und zwei Wechselrichter (102) umfasst, wobei die zwei Wechselrichter (102) mit der Batterie (101) verbunden sind, der erste Motor (21) mit einem der zwei Wechselrichter (102) verbunden ist und der zweite Motor (22) mit dem anderen der zwei Wechselrichter (102) verbunden ist.

5. Fahrzeug, umfassend das Hybridantriebssystem, wie in einem der Ansprüche 1 bis 4 definiert.

## Revendications

1. Système d'alimentation hybride, comprenant : une boîte de vitesses, un moteur thermique (1), un premier moteur électrique (21) et un deuxième moteur électrique (22) ; dans lequel
la boîte de vitesses comprend un premier arbre d'entrée (31), un arbre de sortie (32), un deuxième arbre d'entrée (33), un premier mécanisme de changement de vitesse et un deuxième mécanisme de changement de vitesse, dans lequel le premier arbre d'entrée (31) est relié à l'arbre de sortie (32) via le premier mécanisme de changement de vitesse, le deuxième arbre d'entrée (33) est relié à l'arbre de sortie (32) via le deuxième mécanisme de changement de vitesse, et le premier arbre d'entrée (31) est espacé coaxialement du deuxième arbre d'entrée (33) ;
dans lequel le moteur thermique (1) et le premier moteur électrique (21) sont en liaison d'entraînement avec le premier arbre d'entrée (31) ;
dans lequel le deuxième moteur électrique (22) peut être mis en liaison d'entraînement avec le deuxième arbre d'entrée (33) ;
le premier mécanisme de changement de vitesse comprend un premier train d'engrenages (4), un premier synchroniseur (71) et un troisième train d'engrenages (6) ; dans lequel un pignon fou d'entrée du premier train d'engrenages (4) est sur le premier arbre d'entrée (31), un pignon de sortie du premier train d'engrenages (4) est fixé coaxialement à l'arbre de sortie (32), un pignon de sortie du troisième train d'engrenages (6) est fixé coaxialement à l'arbre de sortie (32), le premier synchroniseur (71) est emmanché sur le premier arbre d'entrée (31), le premier synchroniseur (71) est disposé entre le pignon fou d'entrée du premier train d'engrenages (4) et un pignon fou d'entrée du troisième train d'engrenages (6), et le premier synchroniseur (71) est configuré pour amener au plus un des pignons fous d'entrée du premier train d'engrenages (4) et du troisième train d'engrenages (6) à être relié au premier arbre d'entrée (31) ;
le deuxième mécanisme de changement de vitesse comprend un deuxième train d'engrenages (5), un arbre de support (91) et un embrayage (92), dans lequel un pignon d'entrée du deuxième train d'engrenages (5) est fixé coaxialement au deuxième arbre d'entrée (33), un pignon de sortie du deuxième train d'engrenages (5) est fixé coaxialement à l'arbre de sortie (32), l'embrayage (92) est disposé entre le pignon d'entrée du deuxième train d'engrenages (5) et le deuxième moteur électrique (22), une première extrémité de l'arbre de support (91) est reliée de manière mobile à une première extrémité du premier arbre d'entrée (31) dans une direction circonférentielle, une deuxième extrémité du premier arbre d'entrée (31) est en liaison d'entraînement avec le moteur thermique (1) et une deuxième extrémité de l'arbre de support (91) est fixée coaxialement au deuxième arbre d'entrée (33) ; et le pignon fou d'entrée du troisième train d'engrenages (6) est sur l'arbre de support (91) ; et
un manchon fixé coaxialement à l'arbre de support (91) est agencé au niveau de la première extrémité de l'arbre de support (91), une extrémité du manchon est ouverte et le manchon est opposé à la première extrémité du premier arbre d'entrée (31), et un roulement est agencé dans le manchon, dans lequel une bague extérieure du roulement est reliée à une paroi interne du manchon, et une bague intérieure du roulement est emmanchée sur la première extrémité du premier arbre d'entrée (31).

2. Système d'alimentation hybride selon la revendication 1, dans lequel le pignon d'entrée du deuxième train d'engrenages (5) est disposé à une extrémité du deuxième arbre d'entrée (33) opposée au premier arbre d'entrée (31).

3. Système d'alimentation hybride selon l'une quelconque des revendications 1 ou 2, dans lequel la boîte de vitesses comprend en outre un quatrième train d'engrenages (93), dans lequel le premier moteur électrique (21) est fixé coaxialement à un pignon d'entrée du quatrième train d'engrenages (93) et un pignon de sortie du quatrième train d'engrenages (93) est relié de manière fixe au premier arbre d'entrée (31).

4. Système d'alimentation hybride selon l'une quelconque des revendications 1 ou 2, comprenant en outre : un ensemble d'alimentation électrique (10), dans lequel l'ensemble d'alimentation électrique (10) comprend une batterie (101) et deux onduleurs (102), les deux onduleurs (102) étant reliés à la batterie (101), le premier moteur électrique (21) étant relié à l'un des deux onduleurs (102) et le deuxième moteur électrique (22) étant relié à l'autre des deux onduleurs (102).

5. Véhicule comprenant le système d'alimentation hybride tel que défini dans l'une quelconque des revendications 1 à 4.
